# EUROPEAN PATENT SPECIFICATION

(11) **EP 4 052 831 B1**
(45) Date of publication and mention of the grant of the patent: **17.04.2024**
(21) Application number: 22157787.7
(22) Date of filing: 21.02.2022
(51) Int. Cl.: B23K 9/09, B23K 9/095

(54) **ARC WELDING APPARATUS**
LICHTBOGENSCHWEISSVORRICHTUNG
APPAREIL DE SOUDAGE À L'ARC

(30) Priority: 03.03.2021 JP 2021033305
(43) Date of publication of application: 07.09.2022
(73) Proprietor: DAIHEN Corporation, Osaka-shi, Osaka 532-8512 (JP)
(72) Inventor: TAKADA, Kento, Osaka-shi, Osaka 532-8512 (JP)
(74) Representative: Boult Wade Tennant LLP

(56) References cited:
- US-A1- 2019 337 080

## Description

### TECHNICAL FIELD

The present disclosure generally relates to an arc welding apparatus. In particular, the present disclosure relates to an arc welding apparatus configured to alternately switch the feeding of a welding wire between forward (normal) feeding and rearward (reverse) feeding, while also being configured to perform welding by repeating a combination of a short circuit period and an arc period.

### BACKGROUND

Conventionally, in consumable electrode type arc welding, the welding is performed with an arc being generated between a welding wire (consumable electrode) and a base metal, while the welding wire is being fed at a constant speed. Typically, in such arc welding, short-circuiting and arc generation occur alternately between the welding wire and the base metal.

JP-A-2018-1270, for example, discloses a conventional arc welding method designed for improvement of welding quality. In this conventional welding method, forward/rearward feeding control is performed in which the feeding of the welding wire is alternately switched between forward feeding and rearward feeding. Further, in repeating the short circuit period and the arc period, when a constriction in a droplet is detected during a short circuit period, the welding current is reduced to a low-level current value to regenerate an arc ("constriction detection control").

The conventional method of constriction detection control is advantageous to reducing the occurrence of spatter, thereby providing a high quality welding result. In order to perform such constriction detection control, it is necessary to detect the constriction state of the droplet accurately based on the voltage at the site of the arc generation. For this reason, in the prior art, dedicated detection lines are provided for the base metal and the welding torch for detection of the voltage at the arc generation site. However, it takes extra time and work to provide such detection lines. Further, if the welding torch is moved during welding, the detection lines may be unduly broken. Further, in welding a relatively large structure, it may be difficult to detect the voltage at the arc generation site.

US 2019/0337080 describes an arc welding control method for controlling welding in which a material of a welding wire is aluminium or an aluminium alloy and a feed speed of the welding wire is alternately switched between a forward feed period and a reverse feed period to repeat a short-circuit period and an arc period.

### SUMMARY OF THE INVENTION

In view of the above circumstances, one object of the present disclosure is to provide an arc welding apparatus capable of reducing the occurrence of spatter without performing constriction detection control in forward/rearward feed arc welding.

According to an aspect of the present disclosure, there is provided an arc welding apparatus configured to perform welding by repeating a short circuit period and an arc period, as set out in claim 1.

Further features are set out in the dependent claims.

With the above-mentioned configuration, it is possible to reduce the occurrence of spatter in forward/rearward feed arc welding without performing constriction detection control.

### BRIEF DESCRIPTION OF DRAWINGS

FIG. 1 is a block diagram of an arc welding apparatus according to an embodiment of the present disclosure.
FIG. 2 is a timing chart illustrating a plurality of signals for the arc welding apparatus of FIG. 1.

### EMBODIMENTS

Embodiments according to the present disclosure will be described below with reference to the drawings.

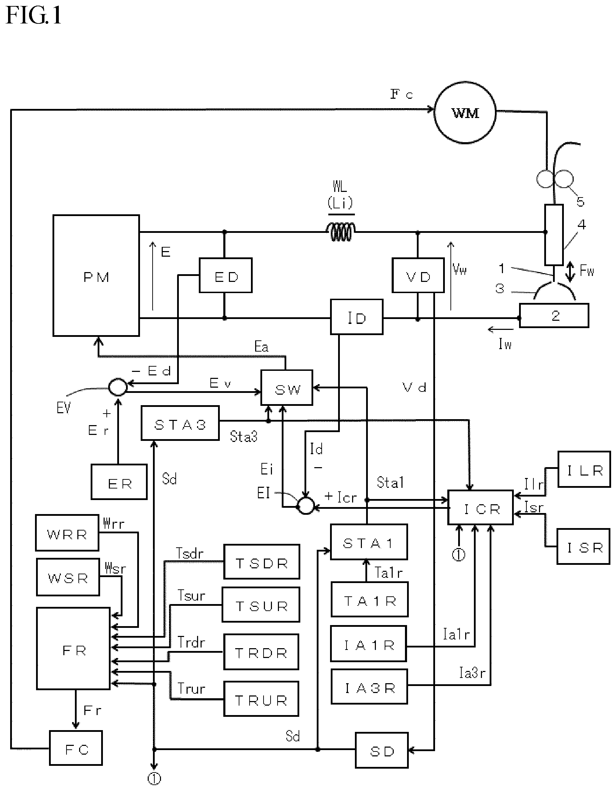

FIG. 1 is a block diagram illustrating an arc welding apparatus according to an embodiment of the present disclosure. Hereinafter, each block will be described with reference to the figure.

A power control circuit PM receives the input of power from, for example, a three-phase 200V commercial power supply (not shown). Then, the power control circuit PM performs output control (e.g., inverter control) based on an error amplification signal Ea, so as to output output power E. As a result, welding voltage Vw and welding current Iw are supplied between a welding wire 1 and a base metal 2. Though not illustrated, the power control circuit PM may include a primary rectifier that rectifies the current from the commercial power supply, a smoothing capacitor that smoothes the rectified current, an inverter circuit that is driven by the error amplification signal Ea to convert the smoothed direct current (DC) into high-frequency alternating current (AC), a high-frequency transformer that steps down the high-frequency AC to a voltage suitable for the welding, and a secondary rectifier that rectifies the lowered high-frequency AC to DC.

A reactor WL smoothes the output power E. The inductance value of the reactor WL is, for example, 100µH.

A feeding motor WM feeds the welding wire 1 at feed speed Fw. To this end, a feed control signal Fc is input to the feeding motor WM, and based on this signal, the feeding motor WM will repeat alternate movement of forward feed and rearward feed. Preferably, the feeding motor WM is a motor with fast transient response. The feeding motor WM may be installed near the tip of a welding torch 4 in order to improve the change rate of the feed speed Fw and to accelerate the reversal of feeding direction. In addition, two feeding motors WM may be used to configure a push-pull type feeding system.

The welding wire 1 is fed through the welding torch 4 by the rotation of a feed roller (or feed rollers) 5 coupled to the feeding motor WM. An arc 3 is generated between the tip of welding wire 1 and the base metal 2. Welding voltage Vw is applied between the two output terminals of the welding power supply. Welding current Iw energizes the arc 3. The welding wire 1 is, for example, a steel wire or an aluminum wire. A shield gas (not shown) may be ejected from the tip of welding torch 4.

An output voltage setting circuit ER outputs an output voltage setting signal Er. In one example, the output voltage setting signal Er is a predetermined signal. An output voltage detection circuit ED detects (and smoothes) the output power E and outputs an output voltage detection signal Ed.

A voltage error amplification circuit EV receives the inputs of the output voltage setting signal Er and the output voltage detection signal Ed. The voltage error amplification circuit EV amplifies an error between the output voltage setting signal Er(+) and the output voltage detection signal Ed(-), and outputs a voltage error amplification signal Ev.

A current detection circuit ID detects the welding current Iw and outputs a current detection signal Id.

In this embodiment, no extra detection lines for detecting the voltage at the arc generation site are provided. Instead, a voltage detection circuit VD is provided to detect the voltage (welding voltage Vw) between the two output terminals of the welding power supply and outputs a voltage detection signal Vd. A short-circuit determination circuit SD determines whether the welding process is in a short circuit period or an arc period based on the inputted voltage detection signal Vd, and outputs the result as a short-circuit determination signal Sd. Specifically, when the value of the voltage detection signal Vd is less than a predetermined short-circuit determination value (for example, about 10V), the short-circuit determination circuit SD determines that the welding process is in the short circuit period, and outputs a high-level short-circuit determination signal Sd. On the other hand, when the value of the voltage detection signal Vd is equal to or higher than the predetermined short-circuit determination value, the short-circuit determination circuit SD determines that the welding process is in the arc period and outputs a low-level short-circuit determination signal Sd.

A forward feed acceleration period setting circuit TSUR outputs a forward feed acceleration period setting signal Tsur. As an example, the forward feed acceleration period setting signal Tsur is a predetermined signal.

A forward feed deacceleration period setting circuit TSDR outputs a forward feed deacceleration period setting signal Tsdr. As an example, the forward feed deacceleration period setting signal Tsdr is a predetermined signal.

A rearward feed acceleration period setting circuit TRUR outputs a rearward feed acceleration period setting signal Trur. As an example, the rearward feed acceleration period setting signal Trur is a predetermined signal.

A rearward feed deacceleration period setting circuit TRDR outputs a rearward feed deacceleration period setting signal Trdr. As an example, the rearward feed deacceleration period setting signal Trdr is a predetermined signal.

A forward feed peak value setting circuit WSR outputs a forward feed peak value setting signal Wsr. As an example, the forward feed peak value setting signal Wsr is a predetermined signal.

A rearward feed peak value setting circuit WRR outputs a rearward feed peak value setting signal Wrr. As an example, a predetermined reward feed peak value setting signal Wrr is a predetermined signal.

A feeding speed setting circuit FR receives the inputs of the forward feed acceleration period setting signal Tsur, the forward feed deacceleration period setting signal Tsdr, the rearward feed acceleration period setting signal Trur, the rearward feed deacceleration period setting signal Trdr, the forward feed peak value setting signal Wsr, the rearward feed. peak value setting signal Wrr and the short-circuit determination signal Sd. Based on these input signals, the feeding speed setting circuit FR outputs a feeding speed pattern generated by the processing described below as a feeding speed setting signal Fr. When the feeding speed setting signal Fr is 0 or more, the welding process is in a forward feeding period. When the feeding speed setting signal Fr is less than 0, the welding process is in a rearward feed period.
(1) During a forward feed acceleration period Tsu (determined by the forward feed acceleration period setting signal Tsur), a forward feeding speed setting signal Fr is outputted, which has a waveform that will accelerate the welding wire 1 from 0 to a positive forward feed peak value Wsp (determined by the forward feed peak value setting signal Wsr).
(2) Then, during a forward feed peak period Tsp, the feeding speed setting signal Fr of the waveform that maintains the above-noted forward feed peak value Wsp is outputted.
(3) When the short-circuit determination signal Sd is changed from a low level (arc period) to a high level (short circuit period) , the welding process shifts to a forward feed deacceleration period Tsd (determined by the forward feed deacceleration period setting signal Tsdr). During the forward feed deacceleration period Tsd, the feeding speed setting signal Fr of the waveform that will decelerate the welding wire 1 from the forward feed peak value Wsp to 0 is outputted.
(4) Then, during a rearward feed acceleration period Tru (determined by the rearward feed acceleration period setting signal Trur), the feeding speed setting signal Fr is outputted, which has the waveform that will accelerate the welding wire 1 from 0 to a negative rearward feed peak value Wrp (determined by rearward feed peak value setting signal Wrr).
(5) Then, during a rearward feed peak period Trp, the feeding speed setting signal Fr is outputted, which has the waveform that maintains the rearward feed peak value Wrp.
(6) When the short-circuit determination signal Sd changes from the high level (short circuit period) to the low level (arc period), the welding process shifts to a rearward feed deacceleration period Trd (determined by the rearward feed deacceleration period setting signal Trdr). During the rearward feed deacceleration period Trd, the feeding speed setting signal Fr of the waveform that decelerates the welding wire 1 from the rearward feed peak value Wrp to 0 is outputted.
(7) The repetition of the above-noted (1) to (6) steps will produce a feeding speed setting signal Fr which has a pattern (feed pattern) in which trapezoids appear alternately on the positive side and the negative side over time.

The feed control circuit FC receives the input of the feeding speed setting signal Fr and outputs the feed control signal Fc to the feeding motor WM. As a result, the welding wire 1 is fed at the feed speed Fw corresponding to the value of the feeding speed setting signal Fr.

A low level current setting circuit ILR outputs a low level current setting signal Ilr. As an example, the low level current setting signal Ilr is a predetermined signal.

A short-circuit current setting circuit ISR outputs a short-circuit current setting signal Isr. As an example, the short-circuit current setting signal Isr is a predetermined signal.

A first arc period setting circuit TA1R outputs a first arc period setting signal Talr. As an example, the first arc period setting signal Talr is a predetermined signal.

A first arc period circuit STA1 receives the input of the short-circuit determination signal Sd and the first arc period setting signal Ta1r, and outputs a first arc period signal Sta1. The first arc period signal Sta1 remains at the high level during a first arc period Ta1 predetermined by the first arc period setting signal Ta1r. The beginning of the first arc period Ta1 is the time when a predetermined delay period Tc has elapsed from the time when the short-circuit determination signal Sd changes to the low level (arc period).

A first arc current setting circuit IA1R outputs a first arc current setting signal Ia1r. As an example, the first arc current setting signal Ia1r is a predetermined signal.

A third arc period circuit STA3 receives the input of the short-circuit determination signal Sd and outputs a third arc period signal Sta3. The third arc period signal Sta3 becomes high level when a predetermined current fall time Td elapses from the time when the short-circuit determination signal Sd changes to the low level (arc period). After that, the third arc period signal Sta3 becomes low level when the short-circuit determination signal Sd changes to the high level (short circuit period).

A third arc current setting circuit IA3R outputs a third arc current setting signal Ia3r. As an example, the third arc current setting signal Ia3r is a predetermined signal.

A current control setting circuit ICR receives the inputs of the short-circuit determination signal Sd, the low level current setting signal Ilr, the short-circuit current setting signal Isr, the first arc period signal Sta1, the third arc period signal Sta3, the first arc current setting signal Ia1r and the third arc current setting signal Ia3r. Based on these input signals, the current control setting circuit ICR performs the following processing to output a current control setting signal Icr.
(1) The period lasting from the time when the short-circuit determination signal Sd changes to the low level (arc period) to the time when the first arc period signal Sta1 changes to the high level is a delay period. During this delay period, the output value of the current control setting signal Icr is equal to the value of the low level current setting signal Ilr.
(2) After that, when the first arc period signal Sta1 remains at the high level (first arc period), the value of the current control setting signal Icr is equal to the value of the first arc current setting signal Ia1r.
(3) During the periods (second arc period and third arc period) lasting from the time when the first arc period signal Sta1 changes to the low level to the time when the third arc period signal Sta3 changes to the low level, the value of the current control setting signal Icr is equal to the value of the third arc current setting signal Ia3r.
(4) When the short-circuit determination signal Sd remains at the high level (short circuit period), the value of the current control setting signal Icr is equal to the value of the short-circuit current setting signal Isr.

A current error amplification circuit EI receives the inputs of the current control setting signal Icr and the current detection signal Id. Further, the current error amplification circuit EI amplifies the error between the current control setting signal Icr(+) and the current detection signal Id(-), and outputs a current error amplification signal Ei.

A power characteristics switching circuit SW receives the inputs of the current error amplification signal Ei, the voltage error amplification signal Ev, the first arc period signal Sta1, and the third arc period signal Sta3. Based on these signals, the power characteristics switching circuit SW performs the following processing and outputs an error amplification signal Ea.
(1) The second arc period Ta2 remains until the first arc period signal Sta1 changes to the low level and the third arc period signal Sta3 changes to the high level. During the second arc period Ta2, the error amplification signal Ea is the same as the voltage error amplification signal Ev. (In other words, the voltage error amplification signal Ev is outputted as the error amplification signal Ea.)
(2) During the periods other than the second arc period Ta2, the current error amplification signal Ei is outputted as the error amplification signal Ea. Due to the power characteristics switching circuit SW, the characteristics of the welding power supply become "constant current characteristics" during the short circuit period, the delay period, the first arc period Ta1 and the third arc period Ta3. On the other hand, during the second arc period Ta2, the characteristics of the welding power supply become "constant voltage characteristics".

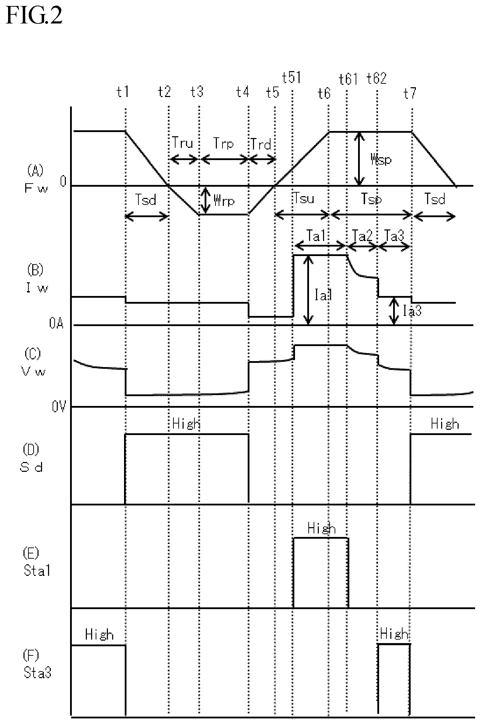

Referring to FIG. 2, the figure shows a timing chart illustrating major signals used for the arc welding apparatus of FIG. 1. Specifically, FIG. 2(A) shows the time change of feed speed Fw. FIG. 2(B) shows the time change of welding current Iw. FIG. 2(C) shows the time change of welding voltage Vw. FIG. 2(D) shows the time change of the short-circuit determination signal Sd. FIG. 2(E) shows the time change of the first arc period signal Sta1. FIG. 2(F) shows the time change of the third arc period signal Sta3.

The feed speed Fw shown in Fig. 2(A) is controlled by the value of the feeding speed setting signal Fr outputted from the feeding speed setting circuit FR. The feed speed Fw corresponds to several periods such as the forward feed acceleration period Tsu (determined by the forward feed acceleration period setting signal Tsur), the forward feed peak period Tsp (lasting until an arc occurs), the forward feed deacceleration period Tsd (determined by the forward feed deacceleration period setting signal Tsdr), the rearward feed acceleration period Tru (determined by the rearward feed acceleration period setting signal Trur), the rearward feed peak period Trp (lasting until an arc occurs), and the rearward feed deacceleration period Trd (determined by the rearward feed deacceleration period setting signal Trdr). The forward feed peak value Wsp is determined by the forward feed peak value setting signal Wsr. The rearward feed peak value Wrp is determined by the rearward feed peak value setting signal Wrr. The feeding speed setting signal Fr has a feeding pattern that changes in a positive and negative trapezoidal wave shape.

The operation for time t1 to t4 (short circuit period) will be described. When a short circuit occurs during the forward feed peak period Tsp (at t1), the welding voltage Vw drops sharply to a short circuit voltage value of several volts as shown in FIG. 2(C). As a result, as shown in FIG. 2(D), the short-circuit determination signal Sd changes to the high level (short circuit period). In response, the welding process transitions to a predetermined forward feed deacceleration period Tsd (t1 to t2), where the feed speed Fw is decreased from the forward feed peak value Wsp to 0, as shown in FIG. 2(A).

After that, as shown in FIG. 2(A), the welding process transitions to a predetermined rearward feed acceleration period Tru (t2 to t3), and the feed speed Fw is accelerated from 0 to the rearward feed peak value Wrp, during which the short circuit period continues.

When the rearward feed acceleration period Tru ends at t3, the welding process transitions to a rearward feed peak period Trp (t3 to t4), as shown in FIG. 2(A), and the feed speed Fw remains at the the rearward feed peak value Wrp. The rearward feed peak period Trp lasts until an arc occurs at t4. Thus, the period starting from t1 and ending at t4 corresponds to the short circuit period.

As shown in FIG. 2(B), during the short circuit period (t1 to t4), the instantaneous value of the welding current Iw is controlled so as to be constant correspondingly to the value of the short-circuit current setting signal Isr (constant current control). To this end, the value of the short-circuit current setting signal Isr is set to be less than or equal to the average value of welding current Iw, which is substantially determined by the average value of the feed speed Fw. Preferably, the value of the short-circuit current setting signal Isr is set to 100 A or less, and more preferably 70 A or less. In this way, by controlling the welding current Iw during the short circuit period to a small current value, it is possible to suppress the occurrence of spatter when a short circuit occurs. In addition, it is possible to promote the smooth absorption of the droplets into the molten pool. Furthermore, the value of welding current Iw at the time of arc re-generation can be reduced without performing constriction detection control as in the prior art. As a result, it is possible to significantly reduce the occurrence of spatter due to the re-occurrence of the arc. In the embodiment, since the constriction detection control is not performed, no detection lines for detecting the voltage at the arc generation site are required. In the prior art, the maximum instantaneous value of the welding current during the short circuit period is 400 A or more. This is because, in order to release the short-circuit state, it is necessary to energize a large current and form a constriction in the droplet by a pinch force. On the other hand, in the present embodiment, the welding wire is fed rearward at high speed. As a result, it is possible to form a constriction and release the short-circuit state without relying on the pinch force. Also, in the present embodiment, the value of the welding current Iw during the short circuit period can be made smaller than that of the prior art.

Next, the operation for t4 to t7 (arc period) will be described. When the constriction progresses due to the rearward feed of the welding wire 1 and an arc is generated (at t4), the welding voltage Vw rapidly increases to an arc voltage value of several tens of volts as shown in FIG. 2(C). Thus, as shown in FIG. 2(D), the short-circuit determination signal Sd changes to the low level (arc period). In response, the welding process transitions to a predetermined rearward feed deacceleration period Trd (t4 to t5), while the feed speed Fw, as shown in FIG. 2(A), decreases from the rearward feed peak value Wrp to 0.

When the rearward feed deacceleration period Trd ends at t5, the welding process transitions to the predetermined forward feed acceleration period Tsu (t5 to t6). During the forward feed acceleration period Tsu, as shown in FIG. 2(A), the feed speed Fw is increased from 0 to the forward feed peak value Wsp. During this period, the arc period continues.

When the forward feed acceleration period Tsu ends at t6, the welding process transitions to the forward feed peak period Tsp, and the feed speed Fw remains at the forward feed peak value Wsp, as shown in FIG. 2(A). During this period, the arc period continues. The forward feed peak period Tsp lasts until a short-circuit occurs at t7. Hence, the arc period starts at t4 and ends at t7. When the short-circuit occurs, the welding process returns to the conditions shown at t1.

When the arc occurs at t4, the welding voltage Vw rises sharply to an arc voltage of about several tens of volts, as shown in FIG. 2(C). The welding current Iw, on the other hand, is caused to have the same value as the low level current setting signal Ilr during the predetermined delay period Tc (which starts at t4), as shown in FIG. 2(B). Such control is performed because if the current value is increased immediately after the arc is generated, the arc length will be rapidly increased due to the reverse feed of the welding wire and the melting of the welding wire by the welding current, whereby the welded state would become unstable.

The delay period Tc ends at t51 during the forward feed acceleration period Tsu. Then, as shown in FIG. 2(E), the first arc period signal Sta1 changes to the high level, and the welding process shifts to the predetermined first arc period Ta1 (t51 to t61). During the first arc period Ta1, the constant current control is continued, and as shown in FIG. 2(B), the first arc current Ia1 (determined by the first arc current setting signal Ia1r) is caused to flow. As shown in FIG. 2(C), the welding voltage Vw takes a relatively large value determined by the current value and the arc load.

At t62, when the predetermined current fall time Td elapses from the arc generation (at t4), the third arc period signal Sta3 changes to the high level, as shown in FIG. 2(F). The period from t61 to t62 corresponds to the second arc period Ta2. During the second arc period Ta2, the constant voltage control is performed. As shown in FIG. 2(B), the second arc current Ia2 has a value smaller than that of the first arc current Ia1 and larger than that of the third arc current Ia3, although it may vary depending on the arc load. In this manner, the output control is performed to satisfy the relation of Ia1> Ia2> Ia3. As shown in FIG. 2(C), the welding voltage Vw is controlled ("constant voltage control") to maintain a predetermined value. The welding voltage Vw is an intermediate value between the voltage value in the first arc period Ta1 and the voltage value in the third arc period Ta3. By performing the constant voltage control for the second arc period Ta2, the arc will have an appropriate length.

The third arc period signal Sta3 changes to the high level at t62. After that, a short circuit occurs at t7. The period from t62 to t7 corresponds to the third arc period Ta3. In the third arc period Ta3, the constant current control is performed. As shown in FIG. 2(B), the third arc current (determined by the third arc current setting signal Ia3r) is caused to flow. As shown in FIG. 2(C), the welding voltage Vw is a value determined by the current value and the arc load. By setting the third arc current value Ia3 immediately before the short circuit to a small value, it is possible to generate a short circuit, while suppressing the occurrence of spatter due to the short circuit.

Numerical examples of the above-noted parameters are as follows:
2.5ms for the short circuit period (which may not be a predetermined value);
4ms for the the arc period (which may not be a predetermined value);
0.5ms for the delay period Tc (which may be a predetermined value);
0.5ms for the first arc period Ta1 (which may be a predetermined value);
2.5ms for the second arc period Ta2 (which may not be a predetermined value);
0.5ms for the third arc period Ta3 (which may not be a predetermined value);
3.5ms for the current drop time (which may be a predetermined value);
70A for the low level current value (which may be a predetermined value);
350A for the 1st arc current value Ia1 (which may be a predetermined value);
60A for the third arc current value Ia3 (which may be a predetermined value);
60m/min for the forward feed peak value Wsp (predetermined value); and
-40m/min for the rearward feed peak value Wrp (which may be a predetermined value).

In the present embodiment, preferably the switching time for the feeding motor WM between the forward feed and the rearward feed may be in a range of 0.5 to 1.5ms. It should be noted that the switching time from the forward feed to the rearward feed corresponds to the sum of the forward feed deacceleration period Tsd and the rearward feed acceleration period Tru. Hence, it is possible to properly set the forward-to-rearward switching time by setting the lengths of these two periods (Tsd and Tru). Likewise, it is possible to properly set the rearward-to-forward switching time by setting the sum of the lengths of the rearward feed deacceleration period Trd and the forward feed acceleration period Tsu. As noted above, in the present embodiment, control is performed to make small the instantaneous value of the welding current Iw for the short circuit period. Thus, by making the size of the droplet smaller than that in the prior art, stable short-circuit transition can be performed in the welding. When the above-noted switching time between the forward feed and the rearward feed is in a range of 0.5 to 1.5ms, the droplet has an appropriate size and the welding condition may become stable. On the other hand, if the switching time exceeds 1.5ms, the droplet size becomes unduly large and the welding condition may become unstable. If the switching time is less than 0.5ms, the feeding direction changes too rapidly, thereby rendering the welding condition unstable.

In the present embodiment, it is preferable that the feeding motor WM may be controlled so that the frequency of repeating the forward/rearward feed of the welding wire is in a range of 120 to 200Hz. The frequency of repeating the forward/rearward feed corresponds to the frequency of repeating the combination of the short circuit period and the arc period. This frequency of repetition can be set by properly setting the forward feed peak value Wsp the rearward feed peak value Wrp, and the switching time between the forward feed and the rearward feed. As described above, in the present embodiment, the instantaneous value of the welding current Iw for the short circuit period is controlled to be a small value. In this way, the size of the droplet can be made smaller than is conventionally possible, whereby stable short-circuit transition can be realized in the welding. When the frequency of repetition is in a range of 120 to 200 Hz, the droplet has an appropriate size and the welding condition may be stable. If the frequency of repetition is less than 120Hz, the droplet size will become large, rendering the welding condition unstable. Likewise, if the frequency of repetition exceeds 200Hz, the droplet fails to grow to have a proper size, rendering the welding condition unstable.

### REFERENCE SIGNS

1 : welding wire 2 : base metal 3 : arc
4 : welding torch 5 : feed roller E : output voltage
Ea : error amplification signal
ED : output voltage detection circuit
Ed : output voltage detection signal
EI : current error amplification circuit
Ei : current error amplification signal
ER : output voltage setting circuit
Er : output voltage setting signal
EV : voltage error amplification circuit
Ev : voltage error amplification signal
FC : feed control circuit Fc : feed control signal
FR : feeding speed setting circuit
Fr : feeding speed setting signal
Fw : feeding speed Ia1 : first arc current
IAlR: first arc current setting circuit
Ia1r : first arc current setting signal
Ia2 : second arc current Ia3 : third arc current
IA3R : third arc current setting circuit
Ia3r : third arc current setting signal
ICR: current control setting circuit
Icr : current control setting signal
ID : current detection circuit Id : current detection signal
ILR : low level current setting circuit
Ilr : low level current setting signal
ISR : short-circuit current setting circuit
Isr : short-circuit current setting signal
Iw : welding current PM : power control circuit
SD : short-circuit determination circuit
Sd : short-circuit determination signal
STA1 : first arc period circuit Sta1 : first arc period signal
STA3 : third arc period circuit Sta3 : third arc period signal
SW : power characteristics switching circuit
Tc : delay period TAlR: first arc period setting circuit
Ta1r : first arc period setting signal Td : current fall time
Trd : rearward feed deacceleration period
TRDR : rearward feed deacceleration period setting circuit
Trdr : rearward feed deacceleration period setting signal
Trp : rearward feed peak period
Tru : rearward feed acceleration period
TRUR : rearward feed acceleration period setting circuit
Trur : rearward feed acceleration period setting signal
Tsd : forward feed deacceleration period
TSDR : forward feed deacceleration period setting circuit
Tsdr : forward feed deacceleration period setting signal
Tsp : forward feed peak period
Tsu : forward feed acceleration period
TSUR : forward feed acceleration period setting circuit
Tsur : forward feed acceleration period setting signal
VD : voltage detection circuit Vd : voltage detection signal
Vw : welding voltage WL : reactor WM : feeding motor
Wrp : rearward feed peak value
WRR : rearward feed peak setting circuit
Wrr : rearward feed peak setting signal
Wsp : forward feed peak value
WSR: forward feed peak value setting circuit
Wsr : forward feed peak value setting signal

## Claims

1. An arc welding apparatus configured to perform welding by repeating a short-circuit period and an arc period, the apparatus comprising:
a feeding motor configured to feed a welding wire by alternately switching between forward feed and rearward feed; and
a power controller configured to supply welding voltage and welding current between the welding wire and a base metal,
**characterized in that**
the power controller is configured to cause an instantaneous value of the welding current from a starting point (t1) of the short-circuit period to an end point (t4) of the short-circuit period to be constant and equal to or less than an average value of the welding current.

2. The arc welding apparatus according to claim 1, wherein the welding current during the short-circuit period has a constant value that is equal to or less than 100A.

3. The arc welding apparatus according to claim 1 or 2, wherein the feeding motor is configured to switch between the forward feed and the rearward feed within a range of 0.5 to 1.5ms.

4. The arc welding apparatus according to any one of claims 1 to 3, wherein the feeding motor is configured to feed the welding wire so that a frequency of repeating the forward feed and the rearward feed for the welding wire is in a range of 120 to 200Hz.

5. The arc welding apparatus according to any one of claims 1 to 4, wherein the power controller is configured to cause the welding current to have a constant value during a time period (t4 to t51) after the end point of the short-circuit period.

## Patentansprüche

1. Lichtbogenschweißvorrichtung, die konfiguriert ist, Schweißen durch Wiederholen einer Kurzschlussperiode und einer Lichtbogenperiode durchzuführen, wobei die Vorrichtung Folgendes umfasst:
einen Zuführmotor, der konfiguriert ist, einen Schweißdraht durch abwechselndes Umschalten zwischen einer Vorwärtszuführung und einer Rückwärtszuführung zuzuführen; und
einen Leistungsregler, der konfiguriert ist, eine Schweißspannung und einen Schweißstrom zwischen dem Schweißdraht und einem Grundwerkstoff breitzustellen,
**dadurch gekennzeichnet, dass**
der Leistungsregler konfiguriert ist, zu bewirken, dass ein Momentanwert des Schweißstroms von einem Startpunkt (t1) der Kurzschlussperiode bis zu einem Endpunkt (t4) der Kurzschlussperiode konstant und gleich oder kleiner als ein Durchschnittswert des Schweißstroms ist.

2. Lichtbogenschweißvorrichtung nach Anspruch 1, wobei der Schweißstrom während der Kurzschlussperiode einen konstanten Wert hat, der gleich oder kleiner als 100 A ist.

3. Lichtbogenschweißvorrichtung nach Anspruch 1 oder 2, wobei der Zuführmotor konfiguriert ist, zwischen der Vorwärtszuführung und der Rückwärtszuführung innerhalb eines Bereichs von 0,5 bis 1,5 ms umzuschalten.

4. Lichtbogenschweißvorrichtung nach einem der Ansprüche 1 bis 3, wobei der Zuführmotor konfiguriert ist, den Schweißdraht so zuzuführen, dass eine Wiederholfrequenz der Vorwärtszuführung und der Rückwärtszuführung für den Schweißdraht in einem Bereich von 120 bis 200 Hz liegt.

5. Lichtbogenschweißvorrichtung nach einem der Ansprüche 1 bis 4, wobei der Leistungsregler konfiguriert ist, zu bewirken, dass der Schweißstrom während eines Zeitraums (t4 bis t51) nach dem Endpunkt der Kurzschlussperiode einen konstanten Wert hat.

## Revendications

1. Dispositif de soudage à l'arc configuré de manière à exécuter le soudage en répétant une période de court-circuit et une période d'arc, le dispositif comprenant :
un moteur d'alimentation configuré de manière à délivrer un fil de soudage en commutant en alternance entre une alimentation normale et une alimentation inversée ; et
un contrôleur de puissance configuré de manière à fournir une tension de soudage et un courant de soudage entre le fil de soudage et un métal de base,
**caractérisé en ce que**
le contrôleur de puissance est configuré de manière faire qu'une valeur instantanée du courant de soudage soit constante et inférieure ou égale à une valeur moyenne du courant de soudage à partir d'un point de départ (t1) de la période de court-circuit jusqu'à un point final (t4) de la période de court-circuit.

2. Dispositif de soudage à l'arc selon la revendication 1, dans lequel le courant de soudage au cours de la période de court-circuit présente une valeur constante qui est inférieure ou égale à 100A.

3. Dispositif de soudage à l'arc selon la revendication 1 ou 2, dans lequel le moteur d'alimentation est configuré de manière à commuter entre une alimentation normale et une alimentation inversée à l'intérieur d'une plage de 0,5 à 1,5 ms.

4. Dispositif de soudage à l'arc selon l'une quelconque des revendications 1 à 3, dans lequel le moteur d'alimentation est configuré de manière à délivrer le fil de soudage de telle sorte qu'une fréquence de répétition entre l'alimentation normale et l'alimentation inverse du fil de soudage est comprise dans une plage de 120 à 200 Hz.

5. Dispositif de soudage à l'arc selon l'une quelconque des revendications 1 à 4, dans lequel le contrôleur de puissance est configuré de manière à faire que le courant de soudage présente une valeur constante à celle au cours d'une période de temps (t4 à t51) après le point final de la période de court-circuit.
